# FASCICULE DE BREVET EUROPEEN

(11) **EP 3 542 372 B1**
(45) Date de publication et mention de la délivrance du brevet: **07.08.2024**
(21) Numéro de dépôt: 17800812.4
(22) Date de dépôt: 13.11.2017
(51) Int. Cl.: G21C 17/01, G21C 17/017, G21C 17/06, G21C 17/08, G01N 21/88, G01N 21/952

(54) **DISPOSITIF D'ÉCLAIRAGE SOUS EAU POUR L'INSPECTION VISUELLE D'UN ÉQUIPEMENT DE RÉACTEUR NUCLÉAIRE ET PROCÉDÉ ASSOCIÉ**
VORRICHTUNG FÜR UNTERWASSERBELEUCHTUNG ZUR VISUELLEN INSPEKTION VON AUSRÜSTUNG FÜR KERNREAKTOREN UND ENTSPRECHENDES VERFAHREN
UNDERWATER LIGHTING DEVICE FOR THE VISUAL INSPECTION OF NUCLEAR REACTOR EQUIPMENT, AND CORRESPONDING METHOD

(30) Priorité: 15.11.2016 FR 1661059
(43) Date de publication de la demande: 25.09.2019
(73) Titulaire: FRAMATOME, 92400 Courbevoie (FR)
(72) Inventeur: WEGELER, Pierre, 01800 Villieu Loyes Mollon (FR); BASSET, Jean-Christophe, 69005 Lyon (FR); BUNOZ, Emmanuel, 69720 Saint-Bonnet-de-Mure (FR)
(74) Mandataire: Lavoix
(86) Numéro de dépôt international: PCT/EP2017/079008
(87) Numéro de publication internationale: WO 2018/091394

(56) Documents cités:
- WO-A1-2005/027141
- FR-A1- 2 494 837
- FR-A1- 2 569 896
- FR-A1- 2 721 704
- FR-A1- 2 755 239
- US-A- 5 912 934
- US-A1- 2011 091 002

## Description

La présente invention concerne le domaine de l'inspection visuelle sous eau d'équipements de réacteur nucléaire.

Il est parfois nécessaire de procéder à une inspection visuelle d'un équipement de réacteur nucléaire situé sous eau, tel qu'un assemblage de combustible nucléaire situé dans une piscine d'une centrale nucléaire.

Un assemblage de combustible nucléaire comprend un faisceau de crayons de combustible nucléaire s'étendant parallèlement les uns aux autres suivant un axe longitudinal. Les crayons de combustible nucléaire sont espacés transversalement les uns des autres. En vue selon l'axe longitudinal, les crayons de combustible nucléaire sont disposés aux noeuds d'un réseau imaginaire généralement régulier. Les crayons de combustible nucléaire sont généralement disposés en rangées séparées par des espaces ou inter-espaces définis entre les rangées. En fonctionnement, les inter-espaces permettent l'écoulement d'un fluide de refroidissement, jouant le rôle de modérateur pour la réaction nucléaire, qui s'écoule depuis le bas vers le haut de l'assemblage de combustible nucléaire selon l'axe longitudinal.

L'assemblage de combustible nucléaire comprend une ossature supportant les crayons.

Dans un assemblage de combustible nucléaire pour réacteur à eau pressurisée (ou PWR pour « Pressurized Water Reactor), l'ossature comprend généralement un embout inférieur et un embout supérieur, espacés suivant l'axe longitudinal, et des tubes-guides reliant l'embout inférieur et l'embout supérieur. Les crayons de combustible nucléaire s'étendent entre l'embout inférieur et l'embout supérieur. Les tubes-guides sont disposés en certains des noeuds du réseau imaginaire et sont donc intégrés dans les rangées de crayons de combustible nucléaire. Les tubes-guides possèdent généralement un diamètre supérieur à celui des crayons de combustible nucléaire, de sorte que les inter-espaces entre les rangées sont plus étroits au droit des tubes-guides.

L'ossature comprend en outre des grilles fixées sur les tubes-guides et traversées par les crayons de combustible nucléaire. Les grilles comprennent des grilles-entretoises pour maintenir les crayons longitudinalement et transversalement et qui peuvent également être configurées pour dévier un flux de fluide de refroidissement s'écoulant dans les inter-espaces. Les grilles peuvent en outre comprendre des grilles de mélange qui n'ont pas de fonction de support des crayons de combustible nucléaire et servent principalement à dévier le flux de fluide de refroidissement. Une grille est par exemple formée de plaquettes entrecroisées.

Pour l'inspection visuelle sous eau d'un assemblage de combustible nucléaire, il est possible d'utiliser un système de visualisation sous eau comprenant un capteur d'images et une source de lumière agencée pour éclairer de face la scène visualisée par le capteur d'images, i.e. du capteur d'images vers la scène. Pour l'inspection, le capteur d'images est orienté vers une face latérale de l'assemblage de combustible nucléaire et la source de lumière éclaire cette face latérale, de façon à visualiser par exemple les inter-espaces définis entre des rangées de crayons de combustible nucléaire s'étendant à partir de la face latérale éclairée vers l'intérieur du faisceau de crayons de combustible nucléaire.

Cependant, les crayons de combustible nucléaire périphériques et les plaquettes périphériques des grilles délimitant la face latérale de l'assemblage de combustible nucléaire sont fortement éclairés et peu de lumière entre dans les inter-espaces définis entre les rangées de crayons de combustible nucléaire s'étendant à partir de la face latérale vers l'intérieur du faisceau de crayons de combustible nucléaire. Les différences de contraste sont telles que la profondeur d'observation dans les inter-espaces est limitée à quelques centimètres.

Il est possible de procéder par transparence, en utilisant un système de visualisation sous eau comprenant un capteur d'images et une source de lumière disposée pour éclairer le faisceau de crayons de combustible nucléaire à contre-jour. Le capteur d'images et la source de lumière sont disposés de part et d'autre de l'assemblage de combustible nucléaire. La source de lumière éclaire en direction du capteur d'images à travers le faisceau de crayons de combustible nucléaire. Un tel système de visualisation permet de détecter des anomalies faisant obstacle à la lumière entre la source de lumière et le capteur d'images, à la manière d'ombres chinoises.

De tels systèmes de visualisation permettent de détecter seulement des objets relativement gros tels qu'une portion de plaquette de grille-entretoise ou de grille de mélange déplacée.

Par ailleurs, lorsqu'une anomalie est détectée il n'est pas possible de déterminer la distance à partir de la face latérale à laquelle cette anomalie est positionnée dans l'assemblage de combustible nucléaire. De plus, la fenêtre d'observation est réduite dans un inter-espace entre deux rangées dont au moins une contient au moins un tube-guide : par exemple environ 1,5 mm de large entre deux rangées dont au moins une contient au moins un tube-guide contre environ 2,5 mm de large entre deux rangées constituées uniquement de crayons de combustible nucléaire.

Il est possible d'utiliser un système de visualisation comprenant un dispositif d'éclairage à fibres optiques possédant des fibres optiques insérables dans les inter-espaces entre les rangées de crayons de combustible nucléaire pour éclairer ces inter-espaces.

Cependant, un tel système de visualisation à fibres optiques est très coûteux et a une durée de vie limitée à quelques heures lors de l'examen d'un assemblage de combustible nucléaire irradié du fait des rayonnements, émis notamment par les crayons de combustible, qui entraînent une dégradation rapide de ces fibres optiques. En outre, du fait du faible diamètre des fibres optiques, la quantité de lumière apportée est limitée et la qualité de l'image acquise par le capteur d'images est faible.

FR2494837A1 divulgue un dispositif de contrôle d'une rangée de crayons de combustible d'un assemblage de combustible nucléaire, le dispositif de contrôle comprenant deux sondes aptes à encadrer la rangée de crayons de combustible en se transmettant un faisceau lumineux, chaque sonde comprenant un guide de lumière formé d'un faisceau de fibres optiques, le guide de lumière d'une sonde étant relié à une source de lumière, celui de l'autre sonde étant relié à un photorécepteur. WO 2005/027141 A1 décrit un dispositif d'éclairage sous eau pour l'inspection d'un assemblage de combustible nucléaire. Ce dispositif comporte un support en forme d'anneau qui est muni de sources de lumière portées par le support pour éclairer l'assemblage de combustible nucléaire.

Un des buts de l'invention est de proposer un dispositif d'éclairage sous eau permettant de faciliter et d'améliorer l'inspection visuelle sous eau d'un équipement de réacteur nucléaire, notamment d'un assemblage de combustible nucléaire.

A cet effet, l'invention propose un dispositif d'éclairage sous eau pour l'inspection d'un équipement de réacteur nucléaire selon la revendication 1.

Des caractéristiques optionnelles sont définies aux revendications 2 à 16.

L'invention concerne également un procédé d'éclairage d'un espace d'un équipement de réacteur nucléaire selon la revendication 17.

L'invention et ses avantages seront mieux compris à la lecture de la description qui va suivre, donnée uniquement à titre d'exemple et faite en référence aux dessins annexés, sur lesquels :
- la Figure 1 est une vue en perspective illustrant un tronçon d'assemblage de combustible nucléaire et un système de visualisation sous eau comprenant un dispositif d'éclairage sous eau selon l'invention pour éclairer l'intérieur de l'assemblage de combustible nucléaire ;
- les Figures 2 et 3 sont des vues en perspective, respectivement assemblée et éclatée, du dispositif d'éclairage sous eau de la figure 1 ;
- la Figure 4 est une vue en coupe du dispositif d'éclairage sous eau selon IV-IV sur la Figure 2 ;
- la Figure 5 est une vue en élévation d'un dispositif d'éclairage sous eau flottant à la surface d'une étendue d'eau ;
- la Figure 6 est une vue en perspective d'un dispositif d'éclairage sous eau selon une variante ; et
- les Figures 7 à 9 sont des vues de dessus de dispositifs d'éclairage sous eau selon des variantes.

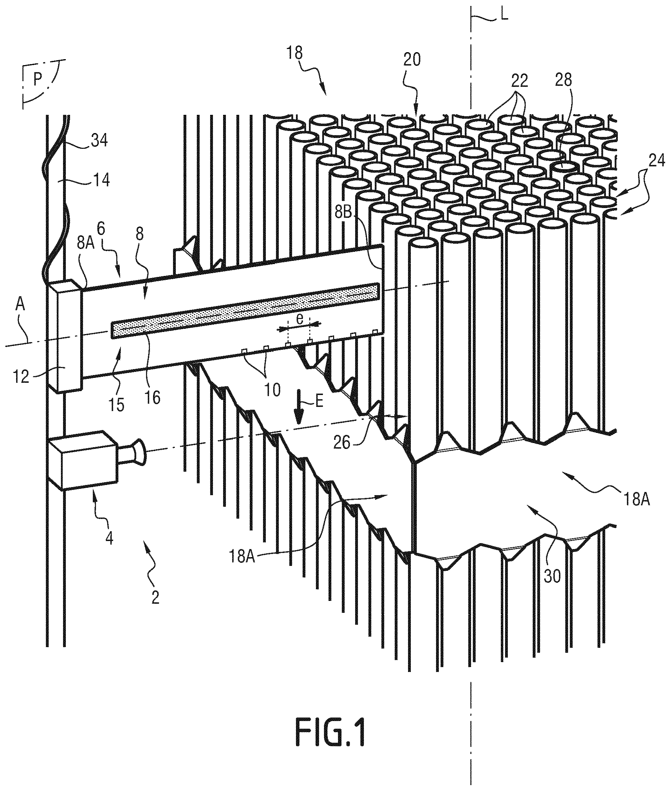

Le système de visualisation 2 de la Figure 1 est configuré pour visualiser un équipement de réacteur nucléaire situé sous eau. Le système de visualisation 2 est donc configuré pour fonctionner sous l'eau.

Le système de visualisation 2 comprend un capteur d'images 4 et un dispositif d'éclairage 6. Le capteur d'images 4 et le dispositif d'éclairage 6 sont configurés pour fonctionner sous l'eau. Le dispositif d'éclairage 6 est configuré pour éclairer la scène prise par le capteur d'images 4.

Le capteur d'images 4 est par exemple une caméra ou un appareil photo.

Le dispositif d'éclairage 6 comprend un support 8 allongé, configuré pour être inséré dans un espace 26 à éclairer et muni de sources de lumière 10 portées par le support 8 pour éclairer l'espace 26 dans lequel le support 8 est inséré.

Chaque source de lumière 10 est par exemple une diode électroluminescentes (ou LED pour « Light Emitting Diode »), une ampoule à incandescence (ampoule luciole) ou une ampoule à décharge, de préférence miniaturisée.

Différents types d'ampoule générant des spectres lumineux ayant des gammes de longueurs d'onde de lumière différentes permettent dans certains cas de mettre en évidence certains composés chimiques (par exemple certains oxydes ou dépôts).

Dans un mode de réalisation, les sources de lumière 10 portées par le support 8 sont d'un même type. Dans un cas particulier, toutes les sources de lumière 10 sont des diodes électroluminescentes.

Il est possible de combiner différents types de sources de lumière 10 sur un même support 8 pour exploiter plusieurs spectres lumineux.

Des exemples de diodes électroluminescentes utilisables pour le dispositif d'éclairage 6 sont les diodes HSMW-C625 commercialisées par la société AVAGO ou des diodes SmartLED^{®}, White Hyperbright LED, modèle AL I283 commercialisées par la société OSRAM.

Dans un mode de réalisation, chaque source de lumière 10 possède par exemple une largeur de l'ordre de quelques dixièmes de millimètre à quelques millimètres, par exemple de 0,3 à 3 mm, et l'écartement entre les sources de lumière 10 est de quelques millimètres, notamment de 5 à 50 mm, par exemple environ 10 mm.

Les sources de lumières 20 sont portées par les support 8 de sorte qu'elles sont situées à l'intérieur de l'espace à inspecter lorsque le support 8 est inséré dans cet espace. L'espace à inspecter peut ainsi être éclairé de l'intérieur.

Le support 8 est allongé suivant une direction d'extension A. Le support 8 possède une extrémité proximale 8A servant à la manipulation du support 8, et une extrémité distale 8B destinée à être insérée dans un espace à éclairer.

Tel qu'illustré sur la Figure 1, le dispositif d'éclairage 6 comprend une série de sources de lumière 10 réparties le long du support 8, suivant la direction d'extension A, de préférence de manière régulière, i.e. avec un écartement constant.

Les sources de lumière 10 de la série sont disposées sur une portion de longueur adjacente à l'extrémité distale 8B. En variante, les sources de lumière 10 de la série sont réparties sur sensiblement toute la longueur du support 8. De manière générale, les sources de lumière 10 sont réparties sur au moins une portion de longueur du support 8.

Le support 8 est configuré pour être inséré dans un espace 26 à inspecter étroit, typiquement un espace 26 présentant une largeur de un à quelques millimètres, par exemple une largeur qui est inférieure à 10 mm, en particulier inférieure à 5 mm, encore en particulier inférieure à 3 mm, et notamment inférieure à 2,5 mm.

Le support 8 présente par exemple, suivant au moins une direction perpendiculaire à la direction d'extension A, une dimension maximale qui est inférieure à 10 mm, en particulier inférieure à 5 mm, encore en particulier inférieure à 3 mm, et notamment inférieure à 1,5 mm.

Le support 8 présente ici la forme d'une plaque ou d'une lame allongée sensiblement plane. Le support 8 s'étend suivant un plan d'extension P incluant la direction d'extension A.

Le support 8 présente une épaisseur, prise perpendiculairement à son plan d'extension P, qui est inférieure à 10 mm, en particulier inférieure à 5 mm, encore en particulier inférieure à 3 mm, et notamment inférieure à 1,5 mm.

Le support 8 présente des bords, incluant deux bords latéraux s'étendant suivant la direction d'extension A, et deux bords d'extrémité situés aux extrémités proximale 8A et distale 8B du support 8.

Dans l'exemple illustré, les sources de lumière 10 sont disposées le long d'un bord du support 8. Le bord portant les sources de lumière 10 est ici un bord latéral s'étendant le long du support 8, entre l'extrémité proximale 8A et l'extrémité distale 8B.

Tel qu'illustré, le support 8 a un contour rectangulaire. Il possède deux bords latéraux longs parallèles et deux bords d'extrémité courts parallèles. Les sources de lumière 10 sont disposées sur un des bords longs.

Les sources de lumière 10 sont orientées pour générer un faisceau lumineux sensiblement dans une direction d'éclairage E. La direction d'éclairage E est ici sensiblement parallèle au plan d'extension P du support 8. La direction d'éclairage E est en outre sensiblement perpendiculaire à la direction d'extension A. Chaque source de lumière 10 est ici orientée pour éclairer suivant la direction d'éclairage E.

Le dispositif d'éclairage 6 comprend ici des sources de lumière 10 sur un seul des bords latéraux du support 8. En variante ou en option, des sources de lumière 10 sont disposées le long des deux bords latéraux longs du support 8 et/ou sur un des bords d'extrémité, à savoir le bord définissant l'extrémité distale 8B du support 8.

Le support 8 n'a pas nécessairement un contour rectangulaire. Le support 8 est de préférence oblong. Les bords latéraux peuvent ne pas être parallèles entre eux ni même rectilignes. Un bord non rectiligne permet de modifier l'orientation d'un faisceau lumineux généré par des sources de lumière 10 disposées le long dudit bord.

Le bord d'extrémité situé à l'extrémité distale 8B du support 8 n'est pas nécessairement rectiligne. En variante, il peut présenter une forme triangulaire, arquée ou encore au moins partiellement circulaire ou ogivale afin de faciliter l'insertion du support 8 au sein de l'espace 26 à éclairer.

Le dispositif d'éclairage 6 comprend une base 12 fixée sur le support 8. La base 12 est fixée à l'extrémité proximale 8A du support 8. La base 12 est ici fixée sur un des bords d'extrémité courts du support 8.

La base 12 est configurée pour la manipulation du dispositif d'éclairage 6 sous eau. Tel qu'illustrée sur la Figure 1, une perche 14 est utilisée pour manipuler le dispositif d'éclairage 6 à distance, par l'intermédiaire de la base 12.

Le support 8 portant les sources de lumière 10 est insérable dans un espace à inspecter étroit pour éclairer cet espace depuis l'intérieur et ainsi améliorer la qualité d'une image de cet espace étroit prise par le capteur d'images 4 depuis l'extérieur de cet espace étroit.

En option, et comme visible sur la Figure 1, le dispositif d'éclairage 6 comprend un dispositif de maintien 15 comprenant au moins un organe de maintien 16 disposé sur le support 8 et configuré pour coopérer par frottement avec des surfaces latérales d'un espace dans lequel le support 8 est inséré pour maintenir le support 8 en position dans ledit espace.

Le dispositif de maintien 15 comprend ici un organe de maintien 16 disposé sur une face latérale du support 8 pour venir en contact avec une surface latérale d'un espace dans lequel est inséré le support 8 et maintenir le support 8 en position par frottement contre cette surface latérale.

Dans un mode de réalisation, le dispositif de maintien 15 comprend au moins un organe de maintien 16 sur une seule des deux faces latérales opposées du support 8. Dans un autre mode de réalisation, le dispositif de maintien 15 comprend au moins un organe de maintien 16 sur chacune des deux faces latérales opposées du support 8. Le support 8 comprend un seul organe de maintien 16 ou plusieurs organes de maintien 16 sur une même face du support 8. En variante, le ou les organes de maintien 16 peuvent être fixés sur un bord latéral long ou sur le bord court de l'extrémité distale 8B du support 8.

Le dispositif de maintien 15 comprend ici un organe de maintien 16 sous la forme d'un patin de frottement fixé sur une face latérale du support 8.

En option, le patin est compressible. Le patin est prévu pour se comprimer du fait de l'insertion du support 8 dans l'espace. Ceci assure un bon contact du patin avec la paroi latérale de l'espace inspecté. Dans un mode de réalisation, le patin compressible est formé d'une mousse de densité adaptée formée d'un matériau pouvant être utilisé sous eau en environnement nucléaire, tel que le polyéthylène.

Le patin est ici allongé dans le même sens que le support 8. Le patin est disposé sensiblement à mi-distance entre les bords latéraux du support 8. En variante, il peut être disposé différemment entre les bords latéraux du support 8.

Tel qu'illustré sur la Figure 1, le système de visualisation 2 est utilisé pour l'inspection d'un assemblage de combustible nucléaire 18 comprenant un faisceau 20 de crayons de combustible nucléaire 22 et de tubes-guides 28 s'étendant parallèlement les uns aux autres suivant un axe longitudinal L.

L'assemblage de combustible nucléaire 18 est allongé suivant l'axe longitudinal L. Seul un tronçon de l'assemblage de combustible nucléaire 18 est représenté sur la Figure 1. En pratique, l'assemblage de combustible nucléaire 18 possède une longueur de l'ordre de 3 à 6 mètres.

Chaque crayon de combustible nucléaire 22 se présente sous la forme d'un tube à l'intérieur duquel est disposé du combustible nucléaire et qui est fermé à ses deux extrémités. Le combustible est par exemple prévu sous la forme d'une colonne de pastilles empilées dans le tube.

Chaque tube-guide 28 se présente sous la forme d'un tube ouvert à une extrémité, et destiné à recevoir des instruments de mesure pour contrôler la réactivité ou un crayon de commande dont l'insertion dans le tube-guide permet de commander la réactivité.

L'assemblage de combustible nucléaire 18 est donc formé d'une pluralité de tube parallèles, constitués par les crayons de combustible nucléaire 22 et les tubes-guides 28.

Les crayons de combustible nucléaire 22 et les tubes-guides 28 sont agencés en rangées 24 parallèles délimitant entre elles des inter-espaces ou espaces 26, chaque espace 26 étant délimité entre deux rangées 24 adjacentes.

L'assemblage de combustible nucléaire 18 possède des faces latérales 18A, seules deux faces latérales 18A adjacentes étant visible sur la Figure 1. Chaque face latérale 18A est formée d'une rangée 24 de crayons de combustible nucléaire 22.

L'assemblage de combustible nucléaire 18 comprend par exemple un faisceau 20 de crayons de combustible nucléaire 22 et de tubes-guides 28 dans lequel les crayons de combustible nucléaire 22 et les tubes-guides 28 sont disposés aux noeuds d'un réseau imaginaire, en général régulier à base carrée ou hexagonale. L'assemblage de combustible nucléaire 18 comprend alors quatre ou six faces latérales 18A.

Seule une fraction des crayons de combustible nucléaire 22 sont représentés sur la Figure 1. En pratique, un faisceau 20 d'un assemblage de combustible nucléaire 18 à base carrée peut comprendre un réseau de 10x10 à 19x19 positions. Le faisceau 20 d'un assemblage de combustible nucléaire 18 à base hexagonale peut comprendre par exemple entre 6 et 10 couronnes soit entre 127 et 331 positions de crayons de combustible nucléaire 22 ou de tube-guides 28.

Le faisceau 20 de l"assemblage de combustible nucléaire 18 comprend au moins un tube-guide 28. Le tube-guide 28 occupe une des positions du réseau, les autres positions étant occupées par des crayons de combustible nucléaire 22. Un seul tube-guide 28 est représenté sur la Figure 1.

Dans la suite, une « rangée » ou « rangée de crayons de combustible nucléaire » désigne une rangée 24 comprenant exclusivement des crayons de combustible nucléaire 22 ou une rangée 24 formée de crayons de combustible nucléaire 22 et d'au moins un tube-guide 28 remplaçant un crayon de combustible nucléaire 22 dans la rangée 24.

L'assemblage de combustible nucléaire 18 comprend une grille 30 traversée par les crayons de combustible nucléaire 22 et les tubes-guides 28. La grille 30 est fixée sur les tubes-guides 28.

La grille 30 est par exemple une grille-entretoise configurée pour maintenir longitudinalement et transversalement les crayons de combustible nucléaire 22, et, optionnellement, pour dévier un flux de fluide de refroidissement circulant entre les crayons de combustible nucléaire 22.

En variante, la grille 30 est une grille de mélange qui n'a pas de fonction de support des crayons de combustible nucléaire 22 et qui sert principalement à dévier le flux de fluide de refroidissement circulant entre les crayons de combustible nucléaire 22.

Le dispositif d'éclairage 6 est configuré pour l'insertion du support 8 dans un espace 26 délimité par deux rangées 24 adjacentes et parallèles.

Le support 8 est ici insérable dans un espace 26 délimité par deux rangées 24, en insérant le support 8 avec sa direction d'extension A sensiblement perpendiculairement à l'axe longitudinal L de l'assemblage de combustible nucléaire 18.

L'épaisseur du support 8 (prise perpendiculairement au plan d'extension P du support 8) est strictement inférieure à la largeur de l'espace 26.

L'épaisseur cumulée du support 8 et du dispositif de maintien 15 est supérieure à celle de l'espace 26. Ainsi, le dispositif de maintien 15 vient en contact avec au moins certains des crayons de combustible nucléaire 22 et/ou des tubes-guides 28 d'une des rangées 24 délimitant l'espace 26, pour assurer un maintien par frottement.

La largeur d'une espace 26 délimité entre deux rangées 24 d'un assemblage de combustible nucléaire 18 est typiquement inférieure à 5 mm.

Lorsque le support 8 du dispositif d'éclairage 6 est inséré à l'intérieur d'un espace 26, les sources de lumière 10 peuvent éclairer l'espace 26 depuis l'intérieur.

Tel qu'illustré sur la Figure 1, le dispositif d'éclairage 6 est disposé pour être inséré à l'intérieur du faisceau 20 de crayons de combustible nucléaire 22 à partir d'une face latérale 18A, et le capteur d'images 4 est disposé en regard de cette même face 18A pour prendre au moins une image. En variante ou en option, le capteur d'images 4 ou un ou plusieurs capteurs d'images supplémentaires est disposé en regard d'une face latérale 18A adjacente ou de la face latérale 18A opposée.

De préférence, les sources de lumière 10 sont agencées pour éclairer suivant une direction d'éclairage E parallèle ou perpendiculaire à l'axe longitudinal L du faisceau 20 de crayons de combustible nucléaire 22 lorsque le support 8 du dispositif d'éclairage 6 est engagé sensiblement perpendiculairement à l'axe longitudinal L dans un espace 26 entre deux rangées 24 adjacentes, comme illustré sur la Figure 1 .

Dans l'exemple illustré, les sources de lumière 10 sont disposées sur le bord latéral inférieur du support 8, et agencées pour éclairer suivant l'axe longitudinal L et vers le bas lorsque le support 8 est engagé dans un espace 26.

En variante ou en option, des sources de lumière 10 sont disposées sur le bord supérieur du support 8, et agencées pour éclairer suivant l'axe longitudinal L et vers le haut lorsque le support 8 est engagé dans un espace 26.

En variante ou en option, des sources de lumière 10 sont disposées sur le bord d'extrémité de l'extrémité distale 8B et agencées pour éclairer perpendiculairement à l'axe longitudinal L lorsque le support 8 est engagé dans un espace 26.

De préférence, la longueur utile du support 8 insérable entre deux rangées 24 de crayons de combustible nucléaire 22 est sensiblement égale à la largeur du faisceau 20 prise suivant une direction transversale d'extension des rangées 24 de crayons de combustible nucléaire 22. Ainsi, le dispositif d'éclairage 6 permet d'éclairer efficacement un espace 26 sur sensiblement toute la profondeur d'un assemblage de combustible nucléaire 18.

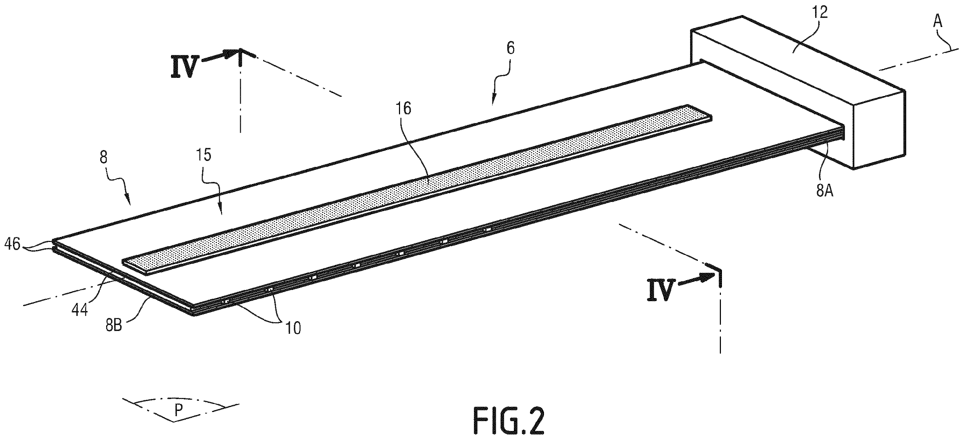

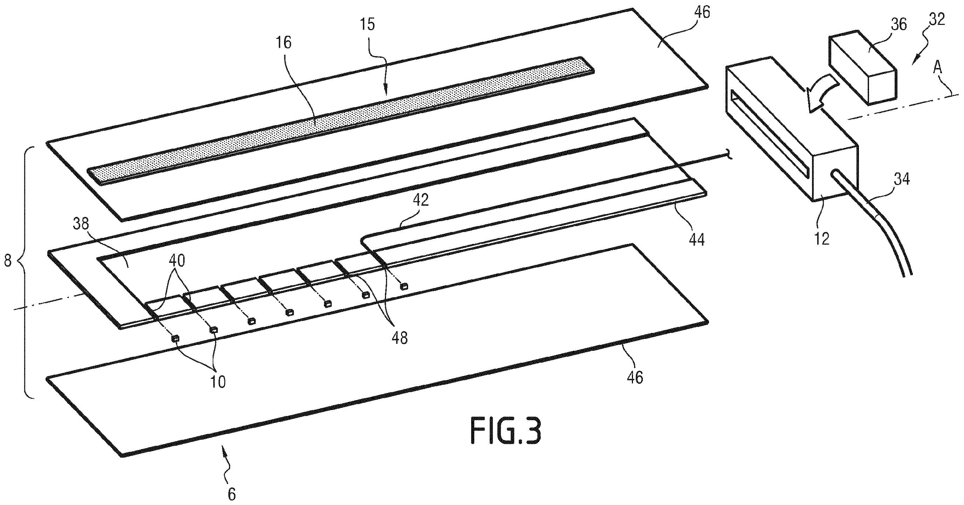

Les Figures 2 et 3 illustrent le dispositif d'éclairage 6 en vues en perspective, respectivement assemblée et éclatée.

Comme illustré sur la Figure 3, le dispositif d'éclairage 6 comprend un dispositif d'alimentation 32 configuré pour l'alimentation des sources de lumière 10 en énergie électrique.

Le dispositif d'alimentation 32 est configuré pour recevoir de l'énergie électrique par l'intermédiaire d'un câble d'alimentation 34 et/ou par une source d'énergie 36 embarquée dans le dispositif d'éclairage 6, telle qu'un accumulateur électrique ou une batterie électrique.

Le dispositif d'alimentation 32, y compris l'éventuelle source d'énergie 36 embarquée, est par exemple logé dans la base 12 (Figure 3).

Dans un mode de réalisation, le dispositif d'alimentation 32 est configuré pour alimenter en électricité chaque source de lumière 10 en continu ou par impulsions. L'alimentation par impulsion permet de limiter la consommation d'électricité et/ou la dissipation d'énergie par les sources de lumière 10, tout en permettant un éclairage suffisamment continu pour la capture d'image par le capteur d'images 4. La fréquence des impulsions est par exemple d'au moins 30 kHz, en particulier d'environ 45 kHz. La perte de luminosité liée à l'alimentation impulsionnelle peut être compensée par une augmentation du nombre de sources de lumière 10.

Par ailleurs, la quantité de lumière émise par les sources de lumière 10 peut diminuer au cours temps en raison de l'environnement nucléaire (eau borée, chaleur et rayonnement). Pour compenser cette perte de quantité de lumière, il est possible d'installer des sources de lumière 10 possédant initialement une puissance d'éclairage maximale strictement supérieure à une puissance d'éclairage requise, et d'adapter l'alimentation des sources de lumière 10 pour générer la puissance d'éclairage requise. Une modification de l'alimentation des sources de lumière 10 au cours de la vie du dispositif d'éclairage 6 permet alors de compenser au fur et à mesure la perte de puissance progressive des sources de lumière 10 due aux conditions d'utilisation. L'adaptation de l'alimentation des sources de lumière 10 est effectuée par exemple par une alimentation par impulsion réglable (aussi nommée découpage ou « Puise Width Modulation »).

Les sources de lumière 10 sont de préférence alimentées en parallèle en énergie électrique. Ainsi, même si une source de lumière 10 est défaillante, les autres sources de lumière 10 continuent à être alimentées en énergie électrique.

Le support 8 comprend au moins un canal interne pour le passage pour une liaison d'alimentation 42 en énergie électrique d'une source de lumière 10. Comme illustré sur la Figure 3, le support 8 comprend ici un canal primaire 38 et des canaux secondaires 40, chaque canal secondaire 40 s'étendant du canal primaire 38 à une source de lumière 10. Chaque canal secondaire 40 s'étend entre le bord portant les sources de lumière 10 et le canal primaire 38. Le canal primaire 38 s'étend le long du support 8 jusqu'à l'extrémité proximale 8A du support 8.

Le canal primaire 38 et les canaux secondaires 40 possèdent par exemple une profondeur de l'ordre de 0,2 mm à 1,0 mm, par exemple une profondeur de l'ordre de 0,4 mm.

Chaque source de lumière 10 est reliée au dispositif d'alimentation 32 par une liaison d'alimentation 42 respective (une seule étant représentée), s'étendant de la source de lumière 10 au dispositif d'alimentation 32 en passant par un canal secondaire 40 et le canal primaire 38.

Le support 8 est multicouche et comprend une âme 44 en forme de plaque ou de lame, l'âme 44 présentant deux faces opposées, et au moins une feuille 46 recouvrant une face de l'âme 44. Le support 8 comprend ici deux feuilles 46, l'âme 44 étant prise en sandwich entre les deux feuilles 46.

Les deux feuilles 46 sont ici distinctes et séparées. En variante, il s'agit de deux parties d'un même flan plié en deux pour couvrir les deux faces opposées de l'âme 44.

Le canal primaire 38 et les canaux secondaires 40 sont formés sur au moins une face de l'âme 44 et refermés de manière étanche par une feuille 46 recouvrant cette face de l'âme 44.

Les sources de lumière 10 affleurent le bord portant les sources de lumière 10 et/ou sont en retrait de ce bord. Ceci évite d'endommager les sources de lumière 10 lors de la manipulation du dispositif d'éclairage 6. Le bord du support 8 est en effet une partie exposée du support 8.

Les sources de lumière 10 sont reçues dans des encoches 48 d'un bord de l'âme 44, chaque encoche 48 recevant au moins une source de lumière 10, ici une source de lumière 10 respective. Ainsi les sources de lumière 10 peuvent affleurer ou être en retrait du bord du support 8 portant les sources de lumière 10.

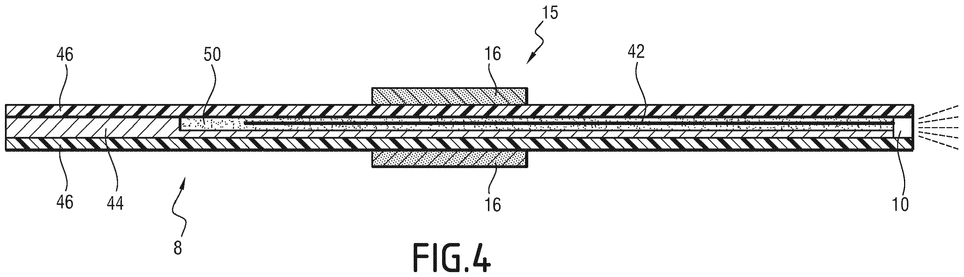

Comme illustré sur la Figure 4, le support 8 comprend en option une couche de résine 50 entre l'âme 44 et au moins une feuille 46 recouvrant une face de l'âme 44. Sur la face de l'âme 44 munie de canaux, la résine 50 remplit les canaux de manière étanche. Dans un exemple de réalisation, l'âme 44 est réalisée en acier inoxydable et la résine 50 est de la résine époxy.

Dans une variante de réalisation, le support 8 est dépourvu de feuille recouvrant l'âme 44. Le support 8 est alors constitué de l'âme 44, par exemple métallique, dans lequel sont ménagés les logements pour les sources de lumière 10 et les canaux pour les liaisons d'alimentation 42 des sources de lumière 10, ces logements et canaux étant remplis de résine 50 pour assurer la protection des sources de lumière 10 et des liaisons d'alimentation 42.

Dans l'exemple illustré, chaque liaison d'alimentation 42 comprend plusieurs fils, chaque fil reliant une borne respective de la source de lumière 10 au dispositif d'alimentation 32 pour l'alimentation électrique de la source de lumière 10. En particulier, chaque source de lumière 10 est dipolaire et chaque liaison d'alimentation 42 comprend deux fils.

En variante, au moins une source de lumière 10, et en particulier chaque source de lumière 10, a une borne connectée électriquement à l'âme 44 (électriquement conductrice) et l'autre à une liaison d'alimentation 42 de façon que la source de lumière 10 est reliée électriquement au dispositif d'alimentation 32 par l'intermédiaire de l'âme 44 et d'une liaison d'alimentation 42.

Lorsque l'âme 44 est utilisée comme conducteur électrique pour la connexion d'au moins une source de lumière 10 au dispositif d'alimentation 32, l'âme 44 est préférentiellement isolée électriquement de son environnement. Pour ce faire, l'âme 44 est recouverte d'au moins une feuille 46 électriquement isolante et/ou enrobé de résine électriquement isolante, par exemple la résine 50 remplissant des logements et/ou des canaux de réception des sources de lumière 10 et/ou des liaisons d'alimentation 42.

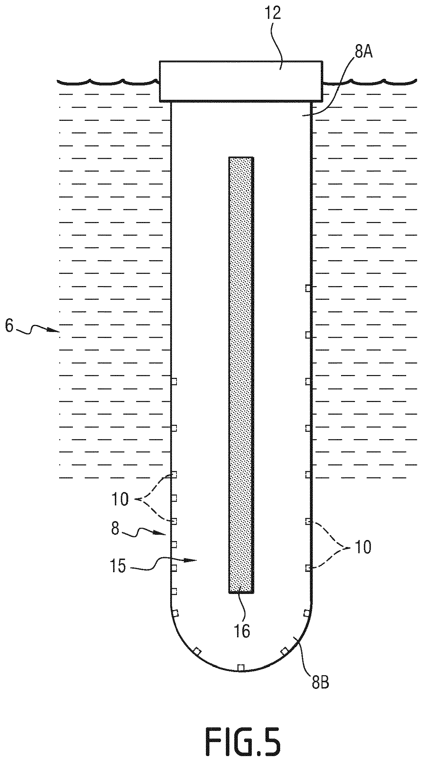

Comme illustré sur la Figure 5, le dispositif d'éclairage 6 est configuré pour flotter. Ceci peut s'avérer utile par exemple si le dispositif d'éclairage 6 est lâché au cours de sa manipulation.

De préférence, le dispositif d'éclairage 6 est configuré pour flotter avec son support 8 orienté sensiblement verticalement avec son extrémité proximale 8A en haut à proximité de la surface de l'eau et son extrémité distale 8B (destinée à être insérée dans l'espace à inspecter) en bas sous la surface de l'eau. Ceci permet de maintenir l'extrémité distale 8B, qui est potentiellement plus irradiée ou radiologiquement contaminée, immergée sous l'eau.

Le dispositif d'éclairage 6 possède par exemple un flotteur disposé sur ou logé dans la base 12 fixée sur l'extrémité proximale 8A du support 8. Le flotteur est par exemple un corps creux ou un corps de densité inférieure à celle de l'eau.

On notera que le dispositif d'éclairage 6 de la Figure 5 possède un support 8 allongé dont le bord situé à l'extrémité distale 8B n'est pas rectiligne mais arqué. Ce bord est plus particulièrement convexe.

Par ailleurs, le dispositif d'éclairage 6 de la Figure 5 comprend une série de sources de lumière 10 sur chacun des bords latéraux du support 8. Il comprend également une série de sources de lumière sur le bord de l'extrémité distale 8B du support 8.

En fonctionnement, pour l'inspection visuelle d'un assemblage de combustible nucléaire 18, par exemple pour le retrait d'un corps étranger, au moins un dispositif d'éclairage 6 est inséré entre deux rangées 24 de crayons de combustible nucléaire 22 de l'assemblage de combustible nucléaire 18. L'insertion est réalisée à l'aide d'une perche 14 manipulée manuellement, comme illustré sur la Figure 1, ou à l'aide d'une pince robotisée.

Il est possible d'essayer plusieurs positions pour le dispositif d'éclairage 6, en essayant différentes rangées 24 et différentes faces latérales de l'assemblage de combustible nucléaire 18, afin de déterminer une position offrant un éclairage satisfaisant de la zone dans laquelle est situé le corps étranger.

Le dispositif d'éclairage 6 pourra être inséré depuis la face latérale 18A à partir de laquelle s'effectuera l'intervention de retrait du corps migrant, par exemple pour une intervention rapide.

En variante, le dispositif d'éclairage 6 pourra être inséré depuis une face latérale 18A adjacente ou depuis une face latérale 18A opposée à celle à partir de laquelle sera effectuée l'intervention, selon ce qui offre le meilleur éclairage et/ou libère un espace suffisant pour l'intervention.

Dans une autre utilisation, le dispositif d'éclairage 6 est utilisé en complément d'un éclairage à contre-jour. En cas de détection d'une ombre suspecte lors de l'inspection avec éclairage en contre-jour, le dispositif d'éclairage 6 est inséré dans le faisceau 20 de crayons de combustible nucléaire 22 pour mieux éclairer la zone suspecte, à proximité du possible défaut.

Le dispositif d'éclairage 6 est particulièrement adapté pour l'éclairage d'espaces 26 dans un faisceau 20 de crayons de combustible nucléaire 22 pour y recherche des anomalies ou des corps étrangers.

Le dispositif d'éclairage 6 est utilisable pour l'inspection d'autres équipements d'un réacteur nucléaire, en particulier ceux présentant des espaces étroits difficilement accessibles par un système de visualisation 2.

Le dispositif d'éclairage 6 est en particulier configuré pour l'éclairage d'un espace délimité entre des tubes d'une pluralité de tube parallèles d'un équipement nucléaire, notamment entre un espace délimité entre deux rangées de tubes parallèles.

Le support 8 est avantageusement insérable dans un espace délimité entre des tubes d'une pluralité de parallèles, avec la direction d'extension A du support 8 sensible perpendiculaire à la direction d'extension des tubes parallèles.

Le dispositif d'éclairage 6 est notamment utilisable pour l'inspection d'un générateur de vapeur du réacteur nucléaire, qui comprend une enceinte contenant une pluralité de tubes parallèles proches les uns des autres. Le support 8 du dispositif d'éclairage 6 peut être inséré dans les espaces entre les tubes pour éclairer ces espaces et procéder à une inspection visuelle.

La largeur d'un espace délimité entre des tubes d'un générateur de vapeur est par exemple comprise entre 5 et 15 mm. Elle est de préférence inférieure à 10 mm.

Le dispositif d'éclairage 6 est manipulable facilement à l'aide d'équipements déjà présents dans les réacteurs nucléaires, comme par exemple une perche 14 ou une pince robotisée.

L'utilisation d'une source d'énergie autonome disposée sur le dispositif d'éclairage 6 évite d'avoir à prévoir un câble d'alimentation 34 et limite les risques d'accrochage avec des outillages ou un capteur d'images 4 adjacent.

Le dispositif d'éclairage 6 n'est pas limité aux modes de réalisation et aux variantes décrits ci-dessus.

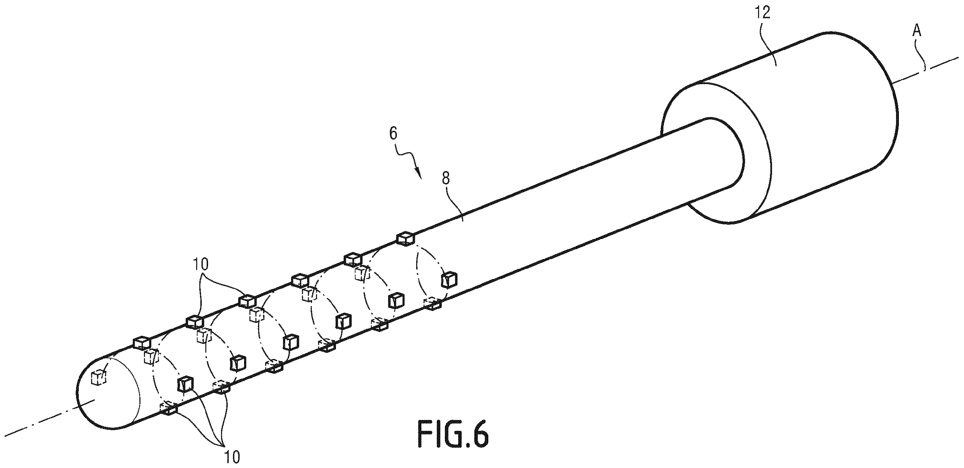

Le dispositif d'éclairage 6 de la Figure 6 diffère de ceux des Figures 1 à 4 et 5 par la forme du support 8 qui présente ici la forme d'une tige allongée, le long de laquelle sont disposées les sources de lumière 10. Les sources de lumière 10 sont ici disposées de manière régulière le long de la tige, avec un écartement constant.

Le support 8 présente ici une section sensiblement circulaire. Le dispositif d'éclairage 6 comprend une base 12 disposée à l'extrémité proximale 8A de la tige.

Dans l'exemple illustré, le dispositif d'éclairage 6 comprend une série de sources de lumière 10 réparties en hélice autour du support 8, selon une hélice centrée sur la direction d'extension A. En variante ou en option, le dispositif d'éclairage 6 comprend au moins une série de sources de lumière 10 alignées suivant une génératrice du support 8 pour éclairer dans une même direction d'éclairage E sensiblement radiale par rapport à la direction d'extension A de la tige. Le dispositif d'éclairage 6 peut comprendre plusieurs séries de sources de lumière 10 alignées suivant des génératrices respectives du support 8.

La base 12 est ici représentée avec une forme cylindrique coaxiale avec le support 8. En variante, la base 12 présente une forme quelconque, par exemple une forme parallélépipédique.

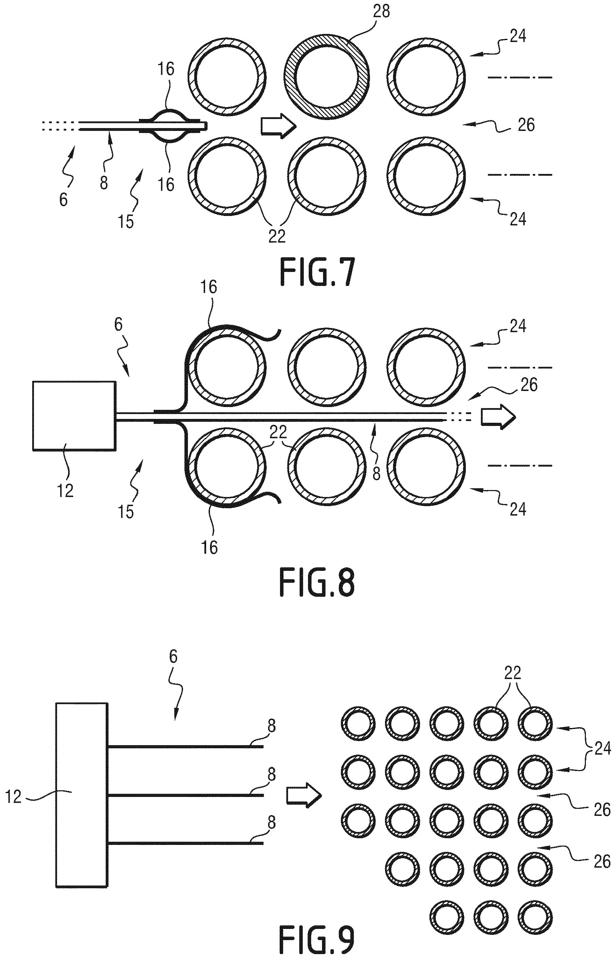

Comme illustré sur la Figure 7, en option ou en variante, le dispositif de maintien 15 comprend au moins un organe de maintien 16 sous la forme d'une lame ressort. Tel qu'illustré ici, le dispositif de maintien 15 comprend au moins un organe de maintien 16 sous la forme d'une lame ressort sur chacune des deux faces opposées du support 8.

De manière analogue, comme illustré sur la Figure 8, en option ou en variante, le dispositif d'éclairage 6 comprend au moins un organe de maintien 16 configuré pour s'encliqueter sur un crayon de combustible nucléaire 22, plus spécifiquement sur un crayon de combustible nucléaire périphérique du faisceau 20, situé sur une face latérale 18A. Le dispositif de maintien 15 comprend ici deux organes de maintien 16, chacun prévu pour s'encliqueter sur un crayon de combustible nucléaire 22 d'une rangée 24 respective parmi les deux rangées 24 entre lesquelles le support 8 du dispositif d'éclairage 6 est inséré. Les organes de maintien 16 sont par exemple situés à proximité de l'extrémité proximale 8A du support 8 pour s'encliqueter sur les crayons de combustible nucléaire 22 périphériques à la fin de l'insertion du support 8 dans l'espace 26.

Le dispositif de maintien 15 de la Figure 9 diffère de celui des Figures 1 à 5 en ce qu'il comprend plusieurs supports 8 parallèles fixés les uns aux autres en formant un peigne de manière que les supports 8 sont insérables simultanément dans des espaces 26 respectifs, afin d'éclairer une zone étendue. Chaque support 8 porte une série de sources de lumière 10. L'écartement entre deux supports 8 adjacents est égal à un multiple entier N de l'écartement entre deux espaces 26 adjacents, N étant égal ou supérieur à 1. L'écartement entre les supports 8 est de préférence constant. En variante, au moins deux écartements entre supports 8 sont différents.

L'assemblage de combustible nucléaire 18 de la Figure 1 est un assemblage de combustible nucléaire pour réacteur à eau sous pression (ou PWR pour « Pressurized Water Reactor). Il possède un faisceau 20 de crayons de combustible nucléaire 22 agencé suivant un réseau à base carrée.

Le dispositif d'éclairage 6 est utilisable également pour l'inspection d'un assemblage de combustible nucléaire pour réacteur à eau bouillante (ou BWR pour « Boiling Water Reactor »).

Un tel assemblage de combustible nucléaire est dépourvu de tubes-guides mais possède en revanche une boîte de canalisation (« channel box » en anglais) à l'intérieur de laquelle s'étend le faisceau de crayons de combustible nucléaire et qui est configurée pour canaliser le fluide de refroidissement s'écoulant le long des crayons de combustible nucléaire. Pour l'inspection visuelle des espaces entre les crayons de combustible nucléaire, il convient au préalable de retirer la boîte de canalisation pour pouvoir ensuite insérer le dispositif d'éclairage 6.

Par ailleurs, le dispositif d'éclairage 6 est utilisable pour des assemblages de combustible nucléaire dont le faisceau est agencé suivant un réseau quelconque, en particulier un faisceau agencé suivant un réseau à base carrée comme illustré sur les Figures 1 et 6 à 8, mais aussi un réseau à base rectangulaire (non illustré) ou un réseau à base hexagonale, comme illustré sur la Figure 9.

## Revendications

1. Dispositif d'éclairage sous eau pour l'inspection d'un équipement de réacteur nucléaire, le dispositif d'éclairage comprenant au moins un support (8) allongé selon une direction d'extension (A), configuré pour être inséré dans un espace (26) de l'équipement de réacteur nucléaire à inspecter et muni de sources de lumière (10) portées par le support (8) pour éclairer l'espace (26) dans lequel le support (8) est inséré, dans lequel le support (8) est configuré pour être inséré entre deux rangées (24) de crayons de combustible nucléaire (22) d'un assemblage de combustible nucléaire (18) et/ou pour être inséré dans un espace délimité entre des tubes d'une pluralité de tubes parallèles d'un générateur de vapeur.

2. Dispositif d'éclairage selon la revendication 1, dans lequel au moins une source de lumière (10) ou chaque source de lumière (10) est une diode électroluminescente ou une ampoule à incandescence ou une ampoule à décharge.

3. Dispositif d'éclairage selon l'une quelconque des revendications précédentes, dans lequel le support (8) présente la forme d'une plaque ou d'une lame ou présente la forme d'une tige.

4. Dispositif d'éclairage selon l'une quelconque des revendications précédentes, dans lequel le support (8) possède une âme (44).

5. Dispositif d'éclairage selon la revendication 4, dans lequel le support (8) possède au moins une feuille (46) recouvrant l'âme (44).

6. Dispositif d'éclairage selon la revendication 5, dans lequel le support (8) possède une âme (44) en forme de plaque ou de lame, prise en sandwich entre deux feuilles (46).

7. Dispositif d'éclairage selon à la revendication 5 ou 6, dans lequel le support (8) comprend une couche de résine (50) entre l'âme (44) et une feuille (46) recouvrant l'âme (44).

8. Dispositif d'éclairage selon l'une quelconque des revendications précédentes, dans lequel le support (8) comprend au moins un canal interne (38, 40) pour le passage d'au moins un fil d'alimentation entre au moins une source de lumière (10) et une des deux extrémités du support (8).

9. Dispositif d'éclairage selon l'une quelconque des revendications précédentes, configuré pour flotter avec le support (8) orienté sensiblement verticalement, une extrémité du support (8) étant à proximité ou à la surface de l'eau et l'autre extrémité du support (8) restant immergée.

10. Dispositif d'éclairage selon l'une quelconque des revendications précédentes, dans lequel les sources de lumière (10) sont alimentées en parallèle.

11. Dispositif d'éclairage selon l'une quelconque des revendications précédentes, comprenant une source d'énergie pour alimenter les sources de lumière (10) portée par le support (8) et/ou une source d'énergie pour alimenter les sources de lumière (10) déportée par rapport au support (8) en étant reliée aux sources de lumière (10) par un câble d'alimentation (34).

12. Dispositif d'éclairage selon l'une quelconque des revendications précédentes, comprenant un dispositif de maintien (15) configuré pour maintenir le support (8) dans un espace (26) dans lequel le support (8) est inséré par frottement avec au moins une surface délimitant l'espace (26) et/ou par encliquetage, notamment sur l'équipement de réacteur nucléaire.

13. Dispositif d'éclairage selon la revendication 12, dans lequel le dispositif de maintien (15) comprend au moins un organe de maintien (16) sous la forme d'une lame ressort ou d'un patin, de préférence compressible, configuré pour assurer le maintien du support (8) par frottement.

14. Dispositif d'éclairage selon l'une quelconque des revendications précédentes, comprenant des sources de lumière (10) disposées le long du support (8).

15. Dispositif d'éclairage selon l'une quelconque des revendications précédentes, dans lequel le support (8) comprend au moins un bord et des sources de lumière (10) disposées le long de ce bord.

16. Dispositif d'éclairage selon la revendication 15, dans lequel le support (8) comprend au moins un bord latéral s'étendant suivant la direction d'extension (A) du support (8) et des sources de lumière (10) disposées le long de ce bord latéral, et/ou un bord d'extrémité définissant une extrémité (8B) du support (8) et des sources de lumière (10) disposées le long de ce bord d'extrémité.

17. Procédé d'éclairage dans un espace (26) d'un équipement de réacteur nucléaire, comprenant l'insertion dans l'espace (26) d'un dispositif d'éclairage (6) sous eau selon l'une quelconque des revendications précédentes.

## Patentansprüche

1. Unterwasser-Beleuchtungsvorrichtung zur Inspektion einer Kernreaktorausrüstung, wobei die Beleuchtungsvorrichtung mindestens einen Träger (8) umfasst, der sich in einer Erstreckungsrichtung (A) erstreckt, zum Einführen in einen Raum (26) der zu inspizierenden Kernreaktorausrüstung konfiguriert und mit Lichtquellen (10) versehen ist, die von dem Träger (8) getragen werden, um den Raum (26) zu beleuchten, in den der Träger (8) eingeführt ist, wobei der Träger (8) zum Einführen zwischen zwei Reihen (24) von Kernbrennstäben (22) einer Kernbrennstoffanordnung (18) und/oder zum Einsetzen in einen Raum konfiguriert ist, der zwischen Rohren einer Mehrzahl paralleler Rohre eines Dampferzeugers begrenzt ist.

2. Beleuchtungsvorrichtung nach Anspruch 1, wobei mindestens eine Lichtquelle (10) oder jede Lichtquelle (10) eine Leuchtdiode oder eine Glühlampe oder eine Entladungslampe ist.

3. Beleuchtungsvorrichtung nach einem der vorhergehenden Ansprüche, wobei der Träger (8) die Form einer Platte oder eines Blattes aufweist oder die Form eines Stabes aufweist.

4. Beleuchtungsvorrichtung nach einem der vorhergehenden Ansprüche, wobei der Träger (8) einen Kern (44) besitzt.

5. Beleuchtungsvorrichtung nach Anspruch 4, wobei der Träger (8) mindestens eine Folie (46) besitzt, die den Kern (44) bedeckt.

6. Beleuchtungsvorrichtung nach Anspruch 5, wobei der Träger (8) einen platten- oder blattförmigen Kern (44) besitzt, der zwischen zwei Folien (46) sandwichartig angeordnet ist.

7. Beleuchtungsvorrichtung nach Anspruch 5 oder 6, wobei der Träger (8) eine Harzschicht (50) zwischen dem Kern (44) und einer den Kern (44) bedeckenden Folie (46) umfasst.

8. Beleuchtungsvorrichtung nach einem der vorhergehenden Ansprüche, wobei der Träger (8) mindestens einen inneren Kanal (38, 40) für den Durchgang mindestens eines Versorgungsdrahts zwischen mindestens einer Lichtquelle (10) und einem der beiden Enden des Trägers (8) umfasst.

9. Beleuchtungsvorrichtung nach einem der vorhergehenden Ansprüche, die so konfiguriert ist, dass sie mit dem im Wesentlichen vertikal ausgerichteten Träger (8) schwimmt, wobei sich ein Ende des Trägers (8) in der Nähe der oder auf der Wasseroberfläche befindet und das andere Ende des Trägers (8) untergetaucht bleibt.

10. Beleuchtungsvorrichtung nach einem der vorhergehenden Ansprüche, wobei die Lichtquellen (10) parallel versorgt werden.

11. Beleuchtungsvorrichtung nach einem der vorhergehenden Ansprüche, umfassend eine Energiequelle zur Versorgung der Lichtquellen (10), die von dem Träger (8) getragen wird, und/oder eine Energiequelle zur Versorgung der Lichtquellen (10), die von dem Träger (8) versetzt ist, indem sie mit den Lichtquellen (10) über ein Versorgungskabel (34) verbunden ist.

12. Beleuchtungsvorrichtung nach einem der vorhergehenden Ansprüche, umfassend eine Haltevorrichtung (15), die so konfiguriert ist, dass sie den Träger (8) in einem Raum (26) hält, in den der Träger (8) durch Reibung mit mindestens einer den Raum (26) begrenzenden Fläche und/oder durch Einrasten eingeführt wird, insbesondere an der Kernreaktorausrüstung.

13. Beleuchtungsvorrichtung nach Anspruch 12, wobei die Haltevorrichtung (15) mindestens ein Halteorgan (16) in Form einer Blattfeder oder einer Kufe, vorzugsweise komprimierbar, umfasst, das so konfiguriert ist, dass es den Halt des Trägers (8) durch Reibung gewährleistet.

14. Beleuchtungsvorrichtung nach einem der vorhergehenden Ansprüche, umfassend Lichtquellen (10), die entlang des Trägers (8) angeordnet sind.

15. Beleuchtungsvorrichtung nach einem der vorhergehenden Ansprüche, wobei der Träger (8) mindestens eine Kante und entlang dieser Kante angeordnete Lichtquellen (10) umfasst.

16. Beleuchtungsvorrichtung nach Anspruch 15, wobei der Träger (8) mindestens eine Seitenkante umfasst, die sich entlang der Erstreckungsrichtung (A) des Trägers (8) erstreckt, und Lichtquellen (10), die entlang dieser Seitenkante angeordnet sind, und/oder eine Endkante, die ein Ende (8B) des Trägers (8) definiert, und Lichtquellen (10), die entlang dieser Endkante angeordnet sind.

17. Verfahren zur Beleuchtung in einem Raum (26) einer Kernreaktorausrüstung, umfassend das Einführen einer Unterwasserbeleuchtungsvorrichtung (6) nach einem der vorhergehenden Ansprüche in den Raum (26).

## Claims

1. Underwater lighting device for the inspection of a nuclear reactor equipment, wherein the lighting device comprises at least one support (8) elongated in an extension direction (A), designed to be inserted into a space (26) of the nuclear reactor equipment to be inspected and provided with light sources (10) carried by the support (8) for illuminating the space (26) in which the support (8) is inserted, wherein the support (8) is designed to be inserted between two rows (24) of nuclear fuel rods (22) of a nuclear fuel assembly (18) and/or to be inserted into a space defined between tubes of a plurality of parallel tubes of a steam generator.

2. Lighting device according to claim 1, wherein at least one light source (10) or each light source (10) is a light emitting diode or an incandescent bulb or a discharge lamp.

3. Lighting device according to any one of the preceding claims, wherein the support (8) has the shape of a plate or a blade or has the shape of a rod.

4. Lighting device according to any one of the preceding claims, wherein the support (8) has a core (44).

5. Lighting device according to claim 4, wherein the support (8) has at least one sheet (46) covering the core (44).

6. Lighting device according to claim 5, wherein the support (8) has a core (44) shaped plate or blade, sandwiched between two sheets (46).

7. Lighting device according to claim 5 or 6, wherein the support (8) comprises a resin layer (50) between the core (44) and a sheet (46) covering the core (44).

8. Lighting device according to any one of the preceding claims, wherein the support (8) comprises at least one internal channel (38, 40) for the passage of at least one supply wire between at least one light source (10) and one of the two ends of the support (8).

9. Lighting device according to any one of the preceding claims, designed to float with the support (8) oriented substantially vertically, one end of the support (8) being near or on the surface of the water and the other end of the support (8) remaining immersed.

10. Lighting device according to any one of the preceding claims, wherein the light sources (10) are supplied in parallel.

11. Lighting device according to any one of the preceding claims, comprising a source of energy for supplying the light sources (10) carried by the support (8) and/or a source of energy to supply the light sources (10) remote from the support (8) and connected to the light sources (10) by a power cable (34).

12. Lighting device according to any one of the preceding claims, comprising a holding device (15) designed to hold the support by friction (8) in a space (26) in which the support (8) is inserted with at least one surface defining the space (26) and/or by snapping onto, in particular, the nuclear reactor equipment.

13. Lighting device according to claim 12, wherein the holding device (15) comprises at least one holding member (16) in the form of a spring blade or a pad, preferably compressible, designed to hold the support (8) by friction.

14. Lighting device according to any one of the preceding claims, comprising light sources (10) arranged along the support (8).

15. Lighting device according to any one of the preceding claims, wherein the support (8) comprises at least one edge and light sources (10) arranged along this edge.

16. Lighting device according to claim 15, wherein the support (8) comprises at least one lateral edge extending in the extension direction (A) of the support (8) and light sources (10) arranged along this lateral edge, and/or an end edge defining an end (8B) of the support (8) and light sources (10) arranged along this end edge.

17. Method of lighting in a space (26) of a nuclear reactor equipment, comprising inserting into the space (26) an underwater lighting device (6) according to any one of the preceding claims.
